# EUROPÄISCHE PATENTSCHRIFT

(11) **EP 2 544 388 B1**
(45) Veröffentlichungstag und Bekanntmachung des Hinweises auf die Patenterteilung: **27.09.2017**
(21) Anmeldenummer: 11173295.4
(22) Anmeldetag: 08.07.2011
(51) Int. Cl.: H04J 3/06, G04G 7/00, G05B 19/25

(54) **Verfahren zur Arbeitstakt- und Zeittaktsynchronisation in einem Automatisierungsnetzwerk**
Method for cycle and time unit synchronisation in an automation network
Procédé de synchronisation de la cadence de travail et du rythme dans un réseau d'automatisation

(43) Veröffentlichungstag der Anmeldung: 09.01.2013
(73) Patentinhaber: Siemens Aktiengesellschaft, 80333 München (DE)
(72) Erfinder: Götz, Franz-Josef, 91180 Heideck (DE); Steindl, Günter, 92284 Poppenricht (DE)

(56) Entgegenhaltungen:
- EP-A2- 1 079 559
- WO-A2-02/075509
- DE-A1-102006 013 640
- DE-B3-102005 039 771
- US-A1- 2011 150 005

## Beschreibung

Die Erfindung betrifft ein Verfahren zur Arbeitstakt- und Zeittaktsynchronisation in einem Automatisierungsnetzwerk, eine Vorrichtung zur Arbeitstakt- und Zeittaktsynchronisation in einem Automatisierungsnetzwerk, und zwar einmal das komplette Automatisierungsnetzwerk und zum anderen einen Sync-Slave, sowie ein Computerprogrammprodukt.

Bisher werden zur Synchronisation von Komponenten eines Automatisierungsnetzwerks bezüglich des Arbeitstakts als auch des Zeittakts mindestens zwei unterschiedliche Sync-Domains benutzt. Der bisherige Stand der Technik bezüglich Arbeitstaktals auch Zeittaktsynchronisation von Komponenten eines Netzwerks ergibt sich aus dem normierten Netzwerk-Zeit-Protokollen:
- IEEE 1588v2,
- IEEE 802.1AS,
- IETF RFC "(S)NTP",
- IEC 61158 TYPE 10 - PTCP.

Auch die folgenden Druckschriften geben den Stand der Technik wieder:
DE 10 2005 039771 B3 (Halang Wolfgang A [DE]; Skambraks Martin [DE]) vom 28. Dezember 2006, offenbart eine Einheit bzw. ein Verfahren zur Verwaltung von Echtzeitprozessen ohne asynchrone Unterbrechungen.

US 2011/15005 A1 (Chen Han-Chiangb[TW] et al) vom 23. Juni 2011 offenbart eine Methode zur zeitlichen Synchronisation von Slaves eines Netzwerks unter Nutzung eines dem Precision Time Protocols (PTP) ähnelnden Netzwerkprotokolls.

WO 02/075509 A2 (Siemens AG [DE]) vom 26. September 2002 offenbart eine Methode und ein System zur Synchronisation eines vernetzten Kommunikationssystems hinsichtlich eines Kommunikationstaktes mittels einer relativen Uhrzeit.

EP 1 079 559 A2 (Siemens AG [DE]) vom 28. Februar 2001 offenbart ein Verfahren und eine Anordnung zur Synchronisation von Systemeinheiten, wobei die Arbeitstakte von insbesondere über eine asynchrone übertragende Verbindung miteinander verbundenen Systemeinheiten über diese Verbindung synchronisiert werden können.

Demgegenüber liegt der Erfindung die Aufgabe zugrunde, ein verbessertes Verfahren sowohl für die Arbeitstakt- als auch für die Zeittaktsynchronisation von Sync-Slaves eines Automatisierungsnetzwerks, eine verbesserte Vorrichtung zur gleichzeitigen Arbeitstakt- als auch für die Zeittaktsynchronisation von Sync-Slaves eines Automatisierungsnetzwerks, und zwar einmal das komplette Automatisierungsnetzwerk und zum anderen einen Sync-Slave, sowie ein verbessertes Computerprogrammprodukt zu schaffen.

Die der Erfindung zugrunde liegenden Aufgaben werden jeweils mit den Merkmalen der unabhängigen Patentansprüche gelöst.

Bevorzugte Ausführungsformen der Erfindung sind in den abhängigen Patentansprüchen angegeben.

Es wird ein Verfahren zur Arbeitstakt- und Zeittaktsynchronisation in einem Automatisierungsnetzwerk, umfassend eine Menge von zu koordinierenden Sync-Slaves und einem Zeit-Sync-Master, wobei die Sync-Slaves von dem Zeit-Sync-Master bezüglich des Zeittakts synchronisiert werden, wobei die Sync-Slaves ihren Arbeitstakt aus dem Zeittakt ableiten.

Es wird also z.B. durch einen Zeit-Sync-Master eines Automatisierungsnetzwerks die allgemein gültige Uhrzeit, wie zum Beispiel die Internationale Atomzeit (TAI) an die einzelnen Sync-Slaves mittels einer Synchronisierungsnachricht übermittelt, wobei jeder einzelne Sync-Slave des Automatisierungsnetzwerks die Uhrzeit beziehungsweise den Zeittakt des Zeit-Sync-Masters übernimmt und jeder einzelne Sync-Slave seinen Arbeitstakt gemäß einer definierten Regel aus diesem Zeittakt ableitet. Dies bedeutet z.B., dass die jeweilige lokale Systemzeit eines jeden Sync-Slave mit der global vorgegebenen allgemein gültigen Uhrzeit des Zeit-Sync-Masters synchronisiert wird, wobei eine direkte Arbeitstakt-Synchronisierung jedoch aufgrund der Ableitung des Arbeitstakts aus dem Zeittakt entfällt.

Die Synchronisierungsnachricht enthält somit nur eine Information über die Uhrzeit, die vom Zeit-Sync-Master vorgegeben wird, jedoch keine Information über den Arbeitstakt. Dies hat den Vorteil, dass für die Synchronisation von Komponenten eines Automatisierungsnetzwerkes sowohl bezüglich des Zeittakts als auch bezüglich des Arbeitstakts nur eine einzige Synchronisierungsnachricht und damit auch nur eine einzige Sync-Domain erforderlich ist. Daraus wiederum resultiert als weiterer Vorteil eine Reduzierung des Vernetzungsgrades und eine Verringerung des Bedarfs an zusätzlicher Hardware, was letztlich zu einer Kostenersparnis führt.

Eine Sync-Domain in diesem Kontext stellt eine Gruppe von Sync-Slaves dar, die einem übergeordneten Zeit- beziehungsweise Takt-Sync-Master untergeordnet sind und dem Zeit-Sync-Master bezüglich der Zeit und dem Takt-Sync-Master bezüglich des Arbeitstakts folgen.

Unter einem Sync-Slave versteht man dabei eine Automatisierungskomponente, die bezüglich Zeittakt und Arbeitstakt von einem übergeordneten Zeit- bzw. Takt-Sync-Master koordiniert werden. Die Aufgabe eines Zeit-Sync-Masters eines Automatisierungsnetzwerks liegt z.B. in der zeitlichen Koordinierung der Automatisierungskomponenten einer technischen Anlage. Ein Takt-Sync-Master übernimmt als übergeordnete Netzwerkkomponente die Gleichtaktung der einzelnen Anwendungskomponenten bezüglich des Arbeitstakts.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das PROFIBUS-Protokoll (z. B. gemäß IEC 61158), ein PROFIBUS-DP-Protokoll, ein PROFIBUS-PA-Protokoll, ein PROFINET-Protokoll, ein PROFINET-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernet-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Nach einer Ausführungsform der Erfindung leiten die Sync-Slaves den Arbeitstakt immer zu einem vorgegeben Zeitpunkt ab, wobei der Zeittakt durch eine zeitlich periodische Funktion gegeben ist, wobei der Zeitpunkt durch einen sich periodisch wiederholenden Referenzpunkt der periodischen Funktion definiert wird. In anderen Worten definiert man einen bestimmten sich wiederholenden Referenzpunkt der zeitlich periodischen Funktion des Zeittakts, zu welchem die Sync-Slaves ihren Arbeitstakt ableiten. Der Vorteil liegt darin, dass die Sync-Slaves zur Ableitung ihres Arbeitstakts nur die Information bezüglich der vom Zeit-Sync-Master vorgegebenen Uhrzeit bzw. des Zeittakts benötigen, jedoch keine Information bezüglich der Differenz zwischen Arbeitstakt und Zeittakt.

Nach einer Ausführungsform der Erfindung handelt es sich bei dem periodisch wiederholten Referenzpunkt um einen Nulldurchgang der periodischen Funktion. Wenn man zum Beispiel als Regel definiert, dass der Arbeitstakt der Sync-Slaves immer im Nulldurchgang (wobei z.B. die "Uhrzeiger" bei 0 sec und 0 ns stehen) der lokalen Systemuhr startet, ist eine Informationsübermittlung bezüglich der Differenz zwischen Arbeitstakt und Zeittakt in der Synchronisierungsnachricht nicht erforderlich. Dies hat den Vorteil, dass sämtliche Sync-Slaves nur noch bezüglich der Uhrzeit synchronisiert werden müssen, was bedeutet, dass der Verletzungsgrad und der Bedarf an zusätzlichen Hardwarekomponenten reduziert wird. Die Verwendung des Nulldurchgangs hat außerdem den Vorteil, dass hier üblicherweise die größte Änderung der periodischen Funktion stattfindet, so dass dieser Referenzpunkt in präziser Weise bestimmt werden kann. Eine periodische Funktion kann z.B. eine Sinusfunktion, eine Rechteckfunktion oder eine Dreieckfunktion sein. Allerdings sind auch andere geeignete periodische Funktionen möglich.

Nach einer Ausführungsform der Erfindung findet eine Anpassung der Frequenz des Zeittakts der Sync-Slaves an den Zeittakt des Zeit-Sync-Masters statt, so dass der Uhrenfehler zwischen Sync-Slaves und Zeit-Sync-Master minimiert wird. Somit können die Sync-Slaves quasi die Frequenz des Zeittakts des übergeordneten Zeit-Sync-Masters übernehmen. Dies bedeutet, dass die Unterschiede zwischen den proprietären Schwingungsfrequenzen jedes einzelnen Sync-Slaves und des Zeit-Sync-Masters im Wesentlichen eliminiert werden können.

Die Differenz zwischen den Zeittakten des Takt-Sync-Masters beziehungsweise des Zeit-Sync-Masters und den Zeittakten der einzelnen Sync-Slaves kommt dadurch zustande, dass die systemimmanenten Quarze der einzelnen Komponenten unterschiedliche proprietäre Schwingungsfrequenzen aufweisen. Daraus resultiert jeweils ein Uhrenfehler im Nanosekundenbereich, das heißt, die Systemuhren der einzelnen Komponenten des Automatisierungsnetzwerks laufen initial nicht synchron.

Der Vorteil dieser Ausführungsform der Erfindung liegt durch die quasi zu Null approximierte "Rate Compensation" darin, dass alle Automatisierungskomponenten des Automatisierungsnetzwerks dieselbe Uhrzeit als Referenzzeit nutzen und sich somit eine einheitliche Regel zum Triggern eines Neustarts eines Arbeitszyklus definieren lässt.

Nach einer Ausführungsform der Erfindung findet die Anpassung der Frequenz lokal für jeden Sync-Slave statt. Dies bedeutet, dass in jedem einzelnen Sync-Slave eine individuelle Anpassung der proprietären Schwingungsfrequenz des systemimmanenten Quarzes an die vom Zeit-Sync-Master vorgegebene Uhrzeit beziehungsweise an den vorgegebenen Zeittakt auf individuelle Weise erfolgt. Dies hat den Vorteil, dass lokal in jedem Sync-Slave eine Optimierung der Anpassungsmethode bezüglich der Schwingungsfrequenz erreicht werden kann. Die Frequenzanpassung jedes einzelnen Sync-Slave erfolgt jeweils unabhängig von den Frequenzanpassungsprozessen der anderen Sync-Slaves im Automatisierungsnetzwerk. Die Steuerung der Frequenzanpassung jedes einzelnen Sync-Slaves findet somit lokal bei jeder einzelnen Automatisierungskomponente und unabhängig von den Anpassungsprozessen der anderen Automatisierungskomponenten statt.

Nach einer Ausführungsform der Erfindung wird das Verfahren in einem Feldbussystem durchgeführt. In diesem Kontext verbindet ein Feldbus in einer Automatisierungsanlage die Automatisierungskomponenten zwecks Kommunikation mit einem Steuerungsgerät. Durch Durchführung des Verfahrens in einem Feldbussystem ergibt sich der Vorteil, dass eindeutig festgelegt ist, welche Netzwerkkomponente eine bestimmte Information zu einem bestimmten Zeitpunkt an die anderen Netzwerkkomponenten kommuniziert. Die Rollenverteilung von Zeit-Sync-Master, Takt-Sync-Master und Sync-Slaves ist somit von Anfang an fest vorgegeben.

Außerdem entfallen durch den Einsatz der Feldbustechnik eine Parallelverdrahtung binärer Signale sowie eine analoge Signalübertragung. Die serielle Vernetzung der Komponenten im Feldbereich eines Feldbussystems ist zudem auch wesentlich kostengünstiger, da der Feldbus in die parallelen Leitungsbündel durch ein einziges Buskabel ersetzt und gleichzeitig alle Ebenen, von der Feld- bis zur Leitebene, verbindet. Zudem wird durch den Einsatz eines Feldbussystems eine höhere Zuverlässigkeit und eine bessere Verfügbarkeit durch kurze Signalwege erzielt. Außerdem verkürzt eine Eigendiagnose durch das Feldbussystem mit Klartextanzeige eindeutig Ausfall- und Wartungszeiten. Erweiterungen oder Änderungen des Feldbussystems sind einfach durchzuführen und garantieren Flexibilität und Zukunftssicherheit.

Nach einer Ausführungsform der Erfindung wird der Sync-Slave von einem Zeit-Sync-Master bezüglich des Zeittakts synchronisiert, wobei der Sync-Slave seinen Arbeitstakt aus dem Zeittakt ableitet. Jeder einzelne Sync-Slave des Automatisierungsnetzwerks besitzt somit die Fähigkeit, mittels einer definierten Regel seinen individuellen Arbeitstakt aus dem vom Zeit-Sync-Master vorgegebenen Zeittakt abzuleiten. So kann z.B. die lokale Systemzeit eines Sync-Slaves, welche zuvor mittels Synchronisierungsnachricht an die Uhrzeit des Zeit-Sync-Masters angepasst wurde, als Basis für die Ableitung des Arbeitstakts des einzelnen Sync-Slave dienen. Dies impliziert z.B. den Vorteil, dass bei einer im SnycSlave lokalisierten und individuellen Ableitung des Arbeitstakts aus dem lokalen, zuvor synchronisierten Zeittakt des Sync-Slaves eine Replizierung und Akkumulation von Fehlern quasi ausgeschlossen wird, wodurch eine Fehlerfortpflanzung im Automatisierungsnetzwerk vermieden wird.

Nach einer Ausführungsform der Erfindung umfasst die Ableitung des Arbeitstakts aus dem Zeittakt die Verwendung einer einzelnen Synchronisierungsnachricht, wobei die Synchronisierungsnachricht zwischen einem Takt-Sync-Master und den Sync-Slaves kommuniziert wird, wobei der Takt-Sync-Master den Sync-Slaves übergeordnet ist und einen Master-Takt bereitstellt, wobei das Verfahren eine Mitteilung einer Differenz zwischen dem Zeittakt und dem Mastertakt unter Nutzung der Synchronisierungsnachricht umfasst, wobei als zusätzliche Information diese Differenz in die Synchronisierungsnachricht aufgenommen wird, wobei der Arbeitstakt aus der Differenz und dem Zeittakt abgeleitet wird.

Durch diese Ausführungsform wird ermöglicht, dass z.B. die Uhrzeit, welche durch den Zeit-Sync-Master bereitgestellt wird, verstellt werden kann, ohne dass sich deshalb der Arbeitstakt ändert, also z.B. Sprünge im Arbeitstakt auftreten. Ein Beispiel hierfür ist die Umstellung zwischen Sommerzeit und Winterzeit, bei welcher der Zeit-Sync-Master einen Zeitsprung um 1 Stunde herbeiführt. Durch die Übertragung der Differenz wird diese Information "Zeitsprung um 1 Stunde" mittels einer Zusatzinformation in der Synchronisierungsnachricht an die Sync-Slaves übermittelt, ohne dass jedoch der Arbeitstakt der Sync-Slaves von dieser Änderung beeinflusst wird.

In einem weiteren Aspekt betrifft die Erfindung ein Automatisierungsnetzwerk mit Arbeitstakt- und Zeittaktsynchronisation, umfassend eine Menge von zu koordinierenden Sync-Slaves und einem Zeit-Sync-Master, wobei die Sync-Slaves von einem Zeit-Sync-Master bezüglich des Zeittakts synchronisierbar sind, wobei die Sync-Slaves dazu ausgebildet sind, ihren Arbeitstakt aus dem Zeittakt zu leiten.

Die Erfindung betrifft ferner einen Sync-Slave zur Arbeitstakt- und Zeittaktsynchronisation in einem Automatisierungsnetzwerk, wobei der Sync-Slave von einem Zeit-Sync-Master bezüglich des Zeittakts synchronisierbar ist, wobei der Sync-Slave dazu ausgebildet ist, seinen Arbeitstakt aus dem Zeittakt abzuleiten.

In einem weiteren Aspekt betrifft die Erfindung ein Computerprogrammprodukt mit von einem Prozessor ausführbaren Instruktionen zur Durchführung des obig beschriebenen Verfahrens.

Im Folgenden werden bevorzugte Ausführungsformen der Erfindung anhand der folgenden Zeichnungen näher erläutert.

Es zeigen:
- Figur 1: ein Flussdiagramm, welches die Verfahrensschritte zur Arbeitstakt- und Zeittaktsynchronisation in einem Automatisierungsnetzwerk beschreibt,
- Figur 2: ein Blockdiagramm zur Veranschaulichung des Verfahrens und der Vorrichtung zur Arbeitstakt- und Zeittaktsynchronisation in einem Automatisierungsnetzwerk.

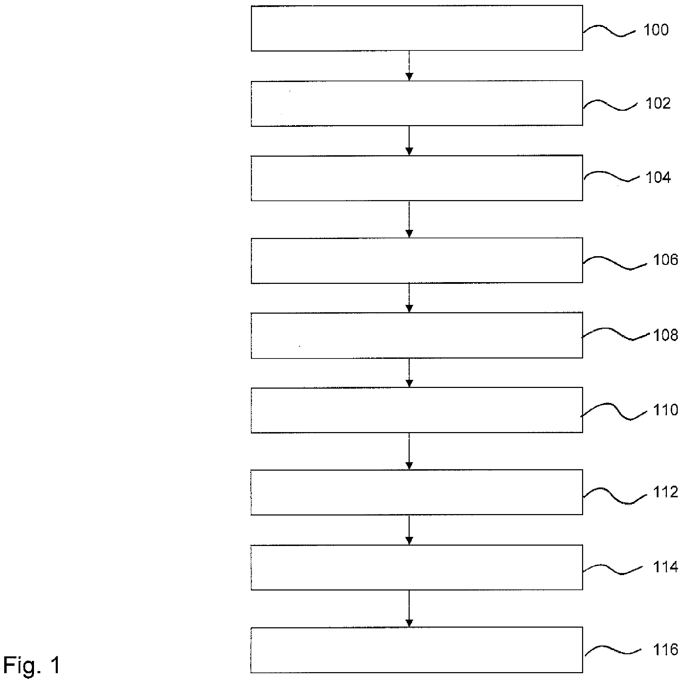

Die Figur 1 zeigt ein Blockdiagramm zur Veranschaulichung der Verfahrensschritte zur Arbeitstakt- und Zeittaktsynchronisation in einem Automatisierungsnetzwerk. In Schritt 100 leitet der Zeit-Sync-Master seinen Arbeitstakt aus der allgemein gültigen Uhrzeit ab. Der Zeit-Sync-Master übermittelt dann in Schritt 102 die extern vorgegebene Uhrzeit mittels einer Synchronisierungsnachricht an den ersten Sync-Slave im Automatisierungsnetzwerk.

Dieser Sync-Slave übernimmt in Schritt 104 die vom Zeit-Sync-Master mittels Synchronisierungsnachricht gesendete Uhrzeit beziehungsweise den Zeittakt, so dass die lokale Systemzeit des Sync-Slaves nun mit der extern vorgegebenen Uhrzeit übereinstimmt. In Schritt 106 leitet der Sync-Slave aus der angepassten lokalen Systemzeit beziehungsweise dem angepassten Zeittakt nun seinen Arbeitstakt ab. Der Sync-Slave gibt in Schritt 108 die vom Zeit-Sync-Master gesendete Uhrzeit beziehungsweise den Zeittakt mittels einer Synchronisierungsnachricht an den nächsten Sync-Slave weiter.

In Schritt 110 übernimmt der nächste Sync-Slave die unveränderte vom Zeit-Sync-Master vorgegebene externe Uhrzeit beziehungsweise den unveränderten Zeittakt des Zeit-Sync-Masters als seine eigene Systemzeit bzw. seinen eigenen Zeittakt. Aus der angepassten lokalen Systemzeit bzw. Zeittakt ermittelt der Sync-Slave in Schritt 112 nun seinen Arbeitstakt.

In Schritt 114 gibt der Sync-Slave mittels einer Synchronisierungsnachricht die vom Zeit-Sync-Master vorgegebene Uhrzeit unverändert an die nächsten Sync-Slaves weiter. Jeder Sync-Slave im Automatisierungsnetzwerk passt seine lokale Systemzeit an die externe Uhrzeit, die vom Zeit-Sync-Master vorgegeben wurde, an und benutzt diese angepasste Systemzeit als Referenz zur Ableitung seines jeweiligen Arbeitstakts.

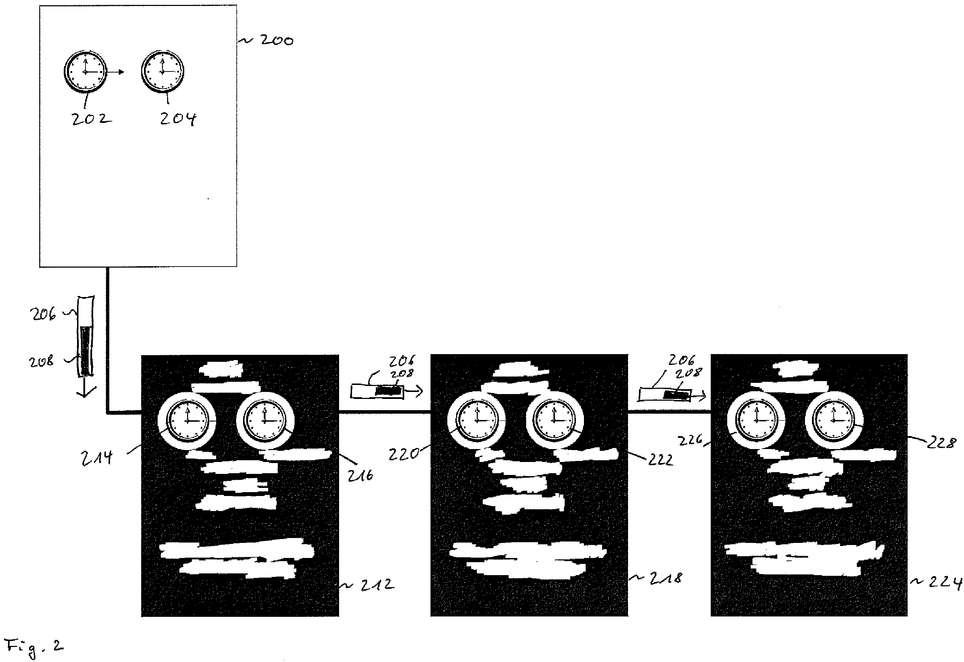

Die Figur 2 zeigt ein Blockdiagramm mit den Komponenten eines Automatisierungsnetzwerks, wobei der Zeit-Sync-Master 200 eine Uhrzeit, die zum Beispiel die allgemein gültige Uhrzeit wie die internationale Atomzeit (TAI) darstellen kann, als lokale Systemzeit 202. Aus dieser Uhrzeit 202 leitet der Zeit-Sync-Master 200 in Schritt 100 seinen Arbeitstakt 204 ab. Der Zeit-Sync-Master 200 sendet eine Synchronisierungsnachricht 206 mit Informationen bezüglich der allgemein gültigen Uhrzeit 208 in Schritt 102 an den nächsten Sync-Slave 212.

Der Sync-Slave 212 übernimmt die vom Zeit-Sync-Master 200 gesendete Uhrzeit 208 als eigene lokale Systemzeit 214 und leitet in Schritt 106 aus diesem angepassten Zeittakt 214 seinen Arbeitstakt 216 ab. Der Sync-Slave 212 gibt die vom Zeit-Sync-Master 200 übermittelte Uhrzeit 208 mittels einer Synchronisierungsnachricht 206 unverändert an den nächsten Sync-Slave 218 weiter.

Dieser Sync-Slave 218 übernimmt in Schritt 110 ebenfalls die vom Zeit-Sync-Master 200 initial verschickte Uhrzeit 208 als eigene lokale Systemzeit 220. Aus dieser angepassten lokalen Systemzeit ermittelt in Schritt 112 der Sync-Slave 218 seinen Arbeitstakt 222. Der Sync-Slave 218 gibt in Schritt 114 mittels einer Synchronisierungsnachricht 206 die Uhrzeit 208 unverändert an den nächsten Sync-Slave 224 weiter.

Dieser Sync-Slave 224 übernimmt die Uhrzeit 208 unverändert als eigene lokale Systemzeit 226 und leitet aus dieser seinen Arbeitstakt 228 ab.

## Patentansprüche

1. Verfahren zur Arbeitstakt- und Zeittaktsynchronisation in einem Automatisierungsnetzwerk, umfassend eine Menge von zu koordinierenden Sync-Slaves (212, 218, 224) und einen Zeit-Sync-Master (200), wobei die Sync-Slaves (212, 218, 224) von dem Zeit-Sync-Master (200) bezüglich des Zeittakts (202) durch die Versendung einer Synchronisationsnachricht (206) synchronisiert werden, **dadurch gekennzeichnet, daß**
die Sync-Slaves (212, 218, 224) mittels der Synchronisationsnachricht (206) den Zeittakt des Zeit-Sync-Masters (200) als lokale Systemzeit (214, 220, 226) übernehmen und hieraus ihren Arbeitstakt (216, 222, 228) ableiten.

2. Verfahren nach Anspruch 1, wobei der Arbeitstakt (216, 222, 228) der Sync-Slaves (212, 218, 224) immer zu einem vorgegebenen, sich periodisch wiederholenden Referenzpunkt des zeitlich periodischen Zeittakts abgeleitet wird.

3. Verfahren nach Anspruch 2, wobei es sich bei dem periodisch wiederholenden Referenzpunkt um einen Nulldurchgang des periodischen Zeittakts handelt.

4. Verfahren nach Anspruch 1, wobei eine Anpassung der Frequenz des Zeittakts (214, 220, 226) der Sync-Slaves (212, 218, 224) an den Zeittakt (202) des Zeit-Sync-Masters (200) stattfindet, so dass der Uhrenfehler zwischen Sync-Slaves (212, 218, 224) und Zeit-Sync-Master (200) minimiert wird.

5. Verfahren nach Anspruch 4, wobei die Anpassung der Frequenz lokal für jeden Sync-Slave (212, 218, 224) stattfindet.

6. Verfahren nach Anspruch 1, wobei das Verfahren in einem Feldbussystem durchgeführt wird.

7. Verfahren zur Arbeitstakt- und Zeittaktsynchronisation eines Sync-Slaves (212, 218, 224) in einem Automatisierungsnetzwerk, wobei der Sync-Slave (212, 218, 224) von einem Zeit-Sync-Master (200) durch die Versendung einer Synchronisationsnachricht (206) bezüglich des Zeittakts (202) synchronisiert wird, wobei der Sync-Slave (212, 218, 224) mittels der Synchronisationsnachricht (206) den Zeittakt des Zeit-Sync-Masters (200) als lokale Systemzeit (214, 220, 226) übernimmt und hieraus seinen Arbeitstakt (216, 222, 228) ableitet.

8. Verfahren nach Anspruch 7, wobei die Ableitung des Arbeitstakts aus dem Zeittakt die Verwendung einer einzelnen Synchronisierungsnachricht umfasst, wobei die Synchronisierungsnachricht zwischen einem Takt-Sync-Master und den Sync-Slaves kommuniziert wird, wobei der Takt-Sync-Master den Sync-Slaves übergeordnet ist und einen Master-Takt bereitstellt, **dadurch gekennzeichnet, daß**
das Verfahren eine Mitteilung einer Differenz zwischen dem Zeittakt und dem Mastertakt unter Nutzung der Synchronisierungsnachricht umfasst, wobei als zusätzliche Information diese Differenz in die Synchronisierungsnachricht aufgenommen wird, wobei der Arbeitstakt aus der Differenz und dem Zeittakt abgeleitet wird.

9. Computerprogramm-Produkt mit von einem Prozessor ausführbaren Instruktionen zur Durchführung der Verfahrensschritte gemäß einem der vorigen Ansprüche.

10. Automatisierungsnetzwerk mit Arbeitstakt- und Zeittaktsynchronisation, umfassend eine Menge von zu koordinierenden Sync-Slaves (212, 218, 224) und einen Zeit-Sync-Master (200), wobei die Sync-Slaves (212, 218, 224) von dem Zeit-Sync-Master (200) bezüglich des Zeittakts (202, 214, 220, 226) durch die Versendung einer Synchronisationsnachricht (206) synchronisierbar sind, **dadurch gekennzeichnet, daß**
die Sync-Slaves (212, 218, 224) dazu ausgebildet sind, mittels der Synchronisationsnachricht (206) den Zeittakt des Zeit-Sync-Masters (200) als lokale Systemzeit (214, 220, 226) zu übernehmen und hieraus ihren Arbeitstakt (216, 222, 228) abzuleiten.

11. Sync-Slave (212, 218, 224) zur Arbeitstakt- und Zeittaktsynchronisation in einem Automatisierungsnetzwerk, wobei der Sync-Slave (212, 218, 224) von einem Zeit-Sync-Master (200) durch die Versendung einer Synchronisationsnachricht (206) bezüglich des Zeittakts (202, 214, 220, 226) synchronisierbar ist, **dadurch gekennzeichnet, daß**
der Sync-Slave (212, 218, 224) dazu ausgebildet ist, mittels der Synchronisationsnachricht (206) den Zeittakt des Zeit-Sync-Masters (200) als lokale Systemzeit (214, 220, 226) zu übernehmen und hieraus seinen Arbeitstakt (216, 222, 228) abzuleiten.

## Claims

1. Method for operating clock and time clock synchronisation in an automation network, comprising a number of sync slaves (212, 218, 224) that are to be coordinated and a time sync master (200), wherein the sync slaves (212, 218, 224) are synchronised in respect of the time clock (202) by the time sync master (200) by way of sending a synchronisation message (206), **characterised in that** the sync slaves (212, 218, 224) take over the time clock of the time sync master (200) as their local system time (214, 220, 226) by means of the synchronisation message (206) and derive their operating clock (216, 222, 228) therefrom.

2. Method according to claim 1, wherein the operating clock (216, 222, 228) of the sync slaves (212, 218, 224) is always derived at a predefined, periodically recurring reference point of the periodic time clock.

3. Method according to claim 2, wherein the periodically recurring reference point is a zero crossing of the periodic time clock.

4. Method according to claim 1, wherein an adjustment of the frequency of the time clock (214, 220, 226) of the sync slaves (212, 218, 224) to the time clock (202) of the time sync master (200) takes place, with the result that the clock error between sync slaves (212, 218, 224) and time sync master (200) is minimised.

5. Method according to claim 4, wherein the adjustment of the frequency takes place locally for each sync slave (212, 218, 224) .

6. Method according to claim 1, wherein the method is performed in a fieldbus system.

7. Method for operating clock and time clock synchronisation of a sync slave (212, 218, 224) in an automation network, wherein the sync slave (212, 218, 224) is synchronised in respect of the time clock (202) by a time sync master (200) by way of sending a synchronisation message (206), wherein the sync slave (212, 218, 224) takes over the time clock of the time sync master (200) as its local system time (214, 220, 226) by means of the synchronisation message (206) and derives its operating clock (216, 222, 228) therefrom.

8. Method according to claim 7, wherein the derivation of the operating clock from the time clock entails the use of a single synchronisation message, wherein the synchronisation message is communicated between a clock sync master and the sync slaves, wherein the clock sync master is superior in rank to the sync slaves and provides a master clock, **characterised in that** the method includes using the synchronisation message to communicate a difference between the time clock and the master clock, wherein said difference is incorporated as additional information in the synchronisation message, and wherein the operating clock is derived from the difference and the time clock.

9. Computer program product comprising instructions that are executable by a processor for the purpose of performing the method steps according to one of the preceding claims.

10. Automation network having operating clock and time clock synchronisation, comprising a number of sync slaves (212, 218, 224) that are to be coordinated and a time sync master (200), wherein the sync slaves (212, 218, 224) can be synchronised in respect of the time clock (202, 214, 220, 226) by the time sync master (200) by way of sending a synchronisation message (206), **characterised in that** the sync slaves (212, 218, 224) are embodied to take over the time clock of the time sync master (200) as their local system time (214, 220, 226) by means of the synchronisation message (206) and to derive their operating clock (216, 222, 228) therefrom.

11. Sync slave (212, 218, 224) for operating clock and time clock synchronisation in an automation network, wherein the sync slave (212, 218, 224) can be synchronised in respect of the time clock (202, 214, 220, 226) by a time sync master (200) by way of sending a synchronisation message (206), **characterised in that** the sync slave (212, 218, 224) is embodied to take over the time clock of the time sync master (200) as its local system time (214, 220, 226) by means of the synchronisation message (206) and to derive its operating clock (216, 222, 228) therefrom.

## Revendications

1. Procédé de synchronisation de la cadence de travail et du rythme dans un réseau d'automatisation, comprenant un certain nombre d'esclaves Sync (212, 218, 224) à coordonner et un maître Sync (200) temporel, les esclaves Sync (212, 218, 224) étant synchronisés par le maître Sync (200) temporel, en ce qui concerne le rythme (202), par l'envoi d'un message (206) de synchronisation, **caractérisé en ce que** les esclaves Sync (212, 218, 224) prennent en charge, comme temps (214, 220, 226) de système local, au moyen du message (206) de synchronisation, le rythme du maître Sync (200) temporel et en déduisent leur cadence (216, 222, 228) de travail.

2. Procédé suivant la revendication 1, dans lequel la cadence (216, 222, 228) de travail des esclaves Sync (212, 218, 224) est déduite toujours à un point de référence donné à l'avance et revenant périodiquement du rythme périodique dans le temps.

3. Procédé suivant la revendication 2, dans lequel le point de référence revenant périodiquement est un passage par zéro du rythme périodique.

4. Procédé suivant la revendication 1, dans lequel une adaptation de la fréquence du rythme (214, 220, 226) des esclaves Sync (212, 218, 224) au rythme (202) du maître Sync (200) temporel a lieu, de manière à minimiser l'erreur d'horloge entre les esclaves Sync (212, 218, 224) et le maître Sync (200) temporel.

5. Procédé suivant la revendication 4, dans lequel l'adaptation de la fréquence a lieu localement pour chaque esclave Sync (212, 218, 224).

6. Procédé suivant la revendication 1, dans lequel on effectue le procédé dans un système de bus sur site.

7. Procédé de synchronisation de la cadence de travail et du rythme d'un esclave Sync (212, 218, 224) dans un réseau d'automatisation, dans lequel on synchronise, en ce qui concerne le rythme (202), l'esclave Sync (212, 218, 224) par un maître Sync (200) temporel par l'envoi d'un message (206) de synchronisation, l'esclave Sync (212, 216, 224) prenant en charge comme temps (214, 220, 226) de système local au moyen du message (206) de synchronisation, le rythme du maître Sync (200) temporel et en déduisant sa cadence (216, 222, 228) de travail.

8. Procédé suivant la revendication 7, dans lequel la déduction de la cadence de travail du rythme comprend l'utilisation d'un message individuel de synchronisation, le message de synchronisation étant communiqué entre un maître Sync de rythme et les esclaves Sync, le maître Sync de rythme étant supérieur hiérarchiquement aux esclaves Sync et mettant à disposition un rythme maître, **caractérisé en ce que** le procédé comprend le fait de faire part d'une différence entre le rythme et le rythme maître en utilisant le message de synchronisation, dans lequel on prend comme information supplémentaire cette différence dans le message de synchronisation, la cadence de travail étant déduite de la différence et du rythme.

9. Produit de programme d'ordinateur, comprenant des instructions pouvant être exécutées par un processeur, pour effectuer les stades du procédé suivant l'une des revendications précédentes.

10. Réseau d'automatisation ayant une synchronisation de la cadence du travail et du rythme, comprenant un certain nombre d'esclaves Sync (212, 218, 224) à coordonner et un maître Sync (200) temporel, les esclaves (212, 218, 224) Sync pouvant être synchronisés par le maître Sync (200) temporel, en ce qui concerne le rythme (202, 214, 220, 226), par l'envoi d'un message (206) de synchronisation, **caractérisé en ce que**
les esclaves Sync (212, 218, 224) sont constitués pour prendre en charge, comme temps (214, 220, 226) de système local au moyen du message (206) de synchronisation, le rythme du maître Sync (200) temporel et en déduire leur cadence (216, 222, 228) de travail.

11. Esclave Sync (212, 218, 224) pour la synchronisation de la cadence de travail et du rythme dans un réseau d'automatisation, l'esclave Sync (212, 218, 224) pouvant être synchronisé, en ce qui concerne le rythme (202, 214, 220, 226), par un maître Sync (200) temporel, par l'envoi d'un message (206) de synchronisation, **caractérisé en ce que** l'esclave Sync (212, 218, 224) est constitué pour prendre en charge, comme temps (214, 220, 226) de système local au moyen du message (206) de synchronisation, le rythme du maître Sync (200) temporel et en déduire sa cadence (216, 222, 228) de travail.
